# EUROPÄISCHE PATENTANMELDUNG

(11) **EP 3 564 193 A1**
(43) Veröffentlichungstag der Anmeldung: **06.11.2019**
(21) Anmeldenummer: 19172159.6
(22) Anmeldetag: 02.05.2019
(51) Int. Cl.: C02F 9/00, C02F 1/04, C02F 1/20, C02F 1/66, C02F 11/13, C02F 103/18

(54) **VERFAHREN ZUR BEHANDLUNG VON KONDENSAT, DAS BEI DER TROCKNUNG VON KLÄRSCHLAMM ANFÄLLT SOWIE ANLAGE ZUM BEHANDELN VON KLÄRSCHLAMM**

(30) Priorität: 04.05.2018 DE 102018110682; 14.05.2018 DE 102018111427; 31.07.2018 DE 102018118521
(71) Anmelder: Huber SE, 92334 Berching (DE)
(72) Erfinder: HEINDL, Albert, 92364 Deining (DE)
(74) Vertreter: Baudler, Ron

(57) **Zusammenfassung**

Die Erfindung betrifft ein Verfahren zur Behandlung von Kondensat (14), welches bei der Trocknung von Klärschlamm im Bereich einer Trocknungsanlage (1) anfällt. Erfindungsgemäß ist vorgesehen, dass das Kondensat (14) zumindest im Hinblick auf seinen Stickstoffgehalt und/oder seinen chemischen Sauerstoffbedarf überwacht wird, und dass das Kondensat (14) in Abhängigkeit seines Stickstoffgehalts und/oder seines chemischen Sauerstoffbedarfs entweder ohne zwischengelagerte Destillation entsorgt oder alternativ einer Destillationsvorrichtung (2) zugeführt wird, wobei das Kondensat (14) mit Hilfe der Destillationsvorrichtung (2) destilliert und dabei in ein Destillat und einen Destillationsrückstand getrennt wird, und wobei das Destillat und der Destillationsrückstand separat entsorgt werden. Darüber hinaus wird eine Anlage zum Behandeln von Klärschlamm sowie von aus dem Klärschlamm entfernter Flüssigkeit vorgeschlagen.

## Beschreibung

Die vorliegende Erfindung betrifft ein Verfahren zur Behandlung von Kondensat, welches bei der Trocknung von Klärschlamm im Bereich einer Trocknungsanlage anfällt.

Ferner wird eine Anlage zum Behandeln von Klärschlamm sowie von aus dem Klärschlamm entfernter Flüssigkeit beschrieben, wobei die Anlage eine Trocknungsanlage zum Entfernen von Flüssigkeit aus dem Klärschlamm durch Verdampfen der Flüssigkeit umfasst, und wobei die Trocknungsanlage einen Verflüssiger umfasst, mit dessen Hilfe die verdampfte Flüssigkeit wieder verflüssigbar ist, so dass ein aus der Trocknungsanlage abzuführendes Kondensat entsteht.

In Kläranlagen fällt im Verlauf der Reinigung von kommunalen und industriellen Abwässern, so genannter Klärschlamm, an. Dieser weist am Ende des Klärprozesses noch einen relativ hohen Wassergehalt auf, der vor der endgültigen Entsorgung (z. B. Verbrennung) noch reduziert werden muss. Es ist daher bekannt, den auf einer Kläranlage anfallenden Klärschlamm maschinell zu trocknen.

Hierfür kommen entsprechende Trocknungsanlagen zum Einsatz. Ein Beispiel einer solchen Trocknungsanlage ist ein Bandtrockner. Hier wird der zu trocknende Klärschlamm auf ein Förderband aufgebracht und durch eine Trocknungskammer bewegt. In der Trocknungskammer erfolgt unter Wärmezufuhr ein Verdampfen der im Klärschlamm vorhandenen Flüssigkeit (die neben Wasser weitere chemische Verbindungen enthält), wodurch die Trockenmasse des Klärschlamms erhöht bzw. dessen Feuchtegehalt reduziert wird.

Die verdampfte Flüssigkeit wird anschließend wieder kondensiert, um eine Belastung der Umgebung der Trocknungsanlage zu vermeiden, so dass in bzw. im Bereich der Trocknungsanlage ein Kondensat entsteht.

Ein derartiges Kondensat kann CSB-Werte bis über 5000 mg/l bei einem pH-Wert von 9 bis 9,5 aufweisen, wobei der CSB-Wert den so genannten chemischen Sauerstoffbedarf wiedergibt. Der chemische Sauerstoffbedarf ist ein Maß für die Summe aller organischen Verbindungen in einer Flüssigkeit, einschließlich der schwer abbaubaren Verbindungen. Der CSB-Wert kennzeichnet die Menge an Sauerstoff in mg/l, welche zur Oxidation der gesamten in der Flüssigkeit enthaltenen organischen Stoffe verbraucht wird. Als chemisches Oxidationsmittel wird in der Regel Kaliumdichromat (K₂Cr₂O₇) verwendet (DIN 38 409-H41, Ausgabe Dezember 1980).

In der Praxis sind in Abhängigkeit von den Eigenschaften der zu trocknenden Klärschlämme große Schwankungsbreiten der CSB-Werte von 300 bis 5.000 anzutreffen. Auf Kraftwerksstandorten (in denen die Klärschlammtrocknung aufgrund der dort zur Verfügung stehenden Wärmeenergie häufig erfolgt) ist oftmals keine ausreichende Behandlung des oben genannten Kondensats möglich. Auch eine Direkteinleitung des Kondensats in die Kanalisation ist aufgrund von Grenzwertüberschreitungen - häufig wird ein CSB-Wert nur bis 2.000 mg/l von den Kommunen akzeptiert - oftmals nicht möglich. Außerdem kann das Kondensat schädliche Stoffe in hoher Konzentration enthalten, welche die Biologie der Kläranlage schädigen und somit die Abwasserreinigung negativ beeinflussen können, so dass auch die Rückführung des Kondensats in die Kläranlage problematisch ist.

Aufgabe der vorliegenden Erfindung ist es daher, ein Verfahren sowie eine Anlage vorzuschlagen, die eine vorteilhafte Behandlung von Kondensat ermöglichen, das bei der Trocknung von Klärschlämmen anfällt.

Die Aufgabe wird gelöst durch ein Verfahren sowie eine Anlage mit den Merkmalen der unabhängigen Patentansprüche.

Erfindungsgemäß zeichnet sich das Verfahren zur Behandlung von Kondensat, welches bei der Trocknung von Klärschlamm im Bereich einer Trocknungsanlage anfällt, dadurch aus, dass das Kondensat zumindest im Hinblick auf seinen Stickstoffgehalt und/oder seinen chemischen Sauerstoffbedarf überwacht wird. Die Überwachung erfolgt mit entsprechenden Sensoren bzw. Messsonden, die am Markt verfügbar sind und daher nicht näher beschrieben werden müssen. Für die kontinuierliche Messung der Parameter CSB-Wert, Nitrat und Nitrit (letztere bestimmen den Stickstoffgehalt) werden seit langem erfolgreich Spektralsensoren (CSB-Wert, Nitrat- und Nitritmessung) sowie ionenselektive Sensoren (zur Ammonium- und Nitratmessung) eingesetzt.

In Abhängigkeit seines Stickstoffgehalts und/oder seines chemischen Sauerstoffbedarfs wird das Kondensat nun entweder direkt über einen Abwasserkanal entsorgt oder alternativ einer Reinigungsvorrichtung zugeführt. Die Entsorgung ohne Behandlung in der Reinigungsvorrichtung kann beispielsweise durch Einleiten des Kondensats in eine kommunale Kanalisation erfolgen.

Die zum Einsatz kommende Reinigungsvorrichtung hat ausschließlich oder vorrangig das Ziel, den chemischen Sauerstoffbedarf und/oder den Stickstoffgehalt des Kondensats zu reduzieren.

Beispielsweise kommen als Reinigungsvorrichtung ein oder mehrere Aktivkohlefilter, ein oder mehrere mechanisch wirkende Filter oder eine UV-Bestrahlungseinrichtung zum Einsatz, in der z. B. H₂O₂ als Oxidationsmittel eingesetzt wird.

Vorzugsweise ist die Reinigungsvorrichtung jedoch als Destillationsvorrichtung ausgebildet.

Wird das Kondensat aufgrund seines CSB-Werts und/oder seines Stickstoffgehalts mit Hilfe der Destillationsvorrichtung destilliert, so wird es in ein Destillat und einen Destillationsrückstand getrennt, wobei die Trennung durch einen oder mehrere Destillationsschritte in der Destillationsvorrichtung erfolgt. Das Destillat und der Destillationsrückstand können schließlich separat entsorgt werden.

Die Destillation, bzw. generell die Reduzierung des chemischen Sauerstoffbedarfs und/oder des Stickstoffgehalts, erfolgt vorzugsweise am Ort der Trocknung des Klärschlamms, so dass ein Transport des Kondensats an einen anderen Ort vermieden werden kann.

Beispielsweise könnten die Trocknungsanlage und die Reinigungsvorrichtung über eine oder mehrere Kondensatleitungen direkt oder unter Zwischenschaltung weiterer Bereiche (z. B. dem nachfolgend noch näher beschriebenen Behältnisses) miteinander verbunden sein.

Denkbar ist ebenso, dass der CSB-Wert und/oder der Stickstoffgehalt des Kondensats nach oder beim Verlassen der Trocknungsanlage gemessen werden, und dass das Kondensat zunächst einen Filter passiert, bevor es der genannten Reinigungsvorrichtung zugeführt oder in den Abwasserkanal entsorgt wird.

Als Filter können beispielsweise Schrägfilter, Rotationsfilter oder sonstige auf dem Gebiet der Abwasserreinigung bekannte Filtereinrichtungen zum Einsatz kommen.

Durch den oder die Filter können Substanzen aus dem Kondensat entfernt werden, die für einen hohen CSB-Wert und/oder einen hohen Stickstoffgehalt des Kondensats verantwortlich sind.

Nach Passieren des oder der Filter wird der CSB-Wert und/oder der Stickstoffgehalt des Kondensats, das den oder die Filter passiert hat, erneut ermittelt. Je nachdem, wie hoch der dann ermittelte CSB-Wert und/oder Stickstoffgehalt des Kondensats ist, wird entschieden, ob das Kondensat direkt über einen Abwasserkanal entsorgt oder der genannten Reinigungsrichtung zugeführt wird.

Durch den Einsatz des oder der genannten Filter kann also der CSB-Wert und/oder der Stickstoffgehalt des die Trocknungsanlage verlassenden Kondensats je nach Betrag der genannten Kenngrößen so weit verringert werden, dass das Kondensat ohne weitere Reinigungsvorrichtung direkt in den Abwasserkanal entsorgt werden kann. Weist das Kondensat hingegen einen CSB-Wert und/oder einen Stickstoffgehalt auf, dessen Betrag auch nach Passieren des oder der Filter noch zu hoch für das Einleiten des Kondensats in den Abwasserkanal ist, so erfolgt die weitere Verringerung des CSB-Werts und/oder des Stickstoffgehaltes durch die nachgeschaltete Reinigungsvorrichtung.

Da das Kondensat nach Passieren der Reinigungsvorrichtung aufgrund der Trennung der Inhaltsstoffe des Kondensats einen verringerten CSB-Wert bzw. einen verringerten Stickstoffgehalt aufweist als das Kondensat vor dem Einleiten in die Reinigungsvorrichtung, kann das Kondensat nach Passieren der Reinigungsvorrichtung in die Kanalisation abgeleitet werden.

Der Reinigungsrückstand, der in der Reinigungsvorrichtung anfällt, weist im Gegensatz zum Kondensat, dass die Reinigungsvorrichtung passiert hat, erhöhte Konzentrationen an unerwünschten bzw. schädlichen Inhaltsstoffen auf. Der Reinigungsrückstand, der bei der Behandlung des Kondensats in der Reinigungsvorrichtung anfällt, wird daher vorzugsweise verbrannt, wobei die Verbrennung in einer Wirbelschichtverbrennungsanlage durchgeführt werden kann.

Insbesondere ist es vorteilhaft, wenn das Kondensat der Reinigungsvorrichtung zugeführt wird, wenn der chemische Sauerstoffbedarf des Kondensats über einem definierten Grenzwert von beispielsweise über 500 mg/l, vorzugsweise über 700 mg/l, liegt. Ebenso ist es vorteilhaft, wenn das Kondensat der Reinigungsvorrichtung zugeführt wird, wenn der Stickstoffgehalt des Kondensats über einem definierten Grenzwert von beispielsweise 70 mg/l, vorzugsweise über 90 mg/l, liegt. Ob das Kondensat gereinigt, insbesondere destilliert, wird, kann abhängig vom CSB-Wert oder vom Stickstoffgehalt oder von beiden Werten sein.

Besonders vorteilhaft ist es, wenn das Kondensat der Reinigungsvorrichtung unabhängig vom Stickstoffgehalt zugeführt wird, wenn der chemische Sauerstoffbedarf des Kondensats über dem genannten Grenzwert liegt. Liegt der chemische Sauerstoffbedarf unterhalb des definierten Grenzwerts, so ist eine Behandlung des Kondensats mit Hilfe der Reinigungsvorrichtung vorteilhaft, wenn der Stickstoffgehalt über dem definierten Grenzwert liegt. Alternativ kann das Kondensat in diesem Fall auch dem nachfolgend noch näher beschriebenen Luftstripping unterzogen werden, bei dem der Stickstoffgehalt verringert wird. Liegen der Stickstoffgehalt und der chemische Sauerstoffbedarf hingegen unterhalb der jeweils definierten Grenzwerte, so ist es von Vorteil, wenn das Kondensat ohne Passieren der Reinigungsvorrichtung in die Kanalisation abgeleitet wird, wobei das Kondensat vor der Ableitung dem genannten Luftstripping unterzogen werden kann.

Besondere Vorteile bringt es mit sich, wenn das Kondensat, das nicht mit Hilfe der Reinigungsvorrichtung behandelt wird, das mit Hilfe der Reinigungsvorrichtung behandelte Kondensat und/oder das Destillat, das bei der Destillation des Kondensats entsteht, einem Abwasserkanal zugeführt werden. Der Abwasserkanal ist Teil einer Kanalisation und leitet die entsprechende Flüssigkeit vorzugsweise zu einer Kläranlage. Die genannten Flüssigkeiten können direkt oder über eine lokale Zwischenspeicherung in den Abwasserkanal eingeleitet werden.

In diesem Zusammenhang sei darauf hingewiesen, dass das Kondensat, welches nicht der Reinigungsvorrichtung zugeführt, sondern in den Kanal geleitet wird, zuvor in einem Becken zwischengespeichert werden kann. In diesem Becken kann es mit weiterem Kondensat vermischt werden, dessen CSB-Wert und/oder dessen Stickstoffgehalt über dem jeweils zuvor genannten definierten Grenzwert liegt. In dem Becken werden also einzelne Kondensatchargen mit unterschiedlichem CSB-Wert und/oder unterschiedlichem Stickstoffgehalt vermischt, so dass eine Mischung entsteht, deren CSB-Wert und/oder dessen Stickstoffgehalt unterhalb des jeweiligen Grenzwerts liegt. Die Mischung kann schließlich in den Kanal eingeleitet werden. In diesem Fall wird ein Teil des Kondensats, das aufgrund seines CSB-Werts und/oder seines Stickstoffgehaltes eigentlich der Reinigungsvorrichtung zugeführt werden müsste, nach Passieren des Beckens in den Kanal eingeleitet, ohne zuvor die Reinigungsvorrichtung zu passieren. Um das Vermischen der einzelnen Kondensatchargen zu ermöglichen, ist dem Becken vorzugsweise eine Rührvorrichtung zugeordnet, mit deren Hilfe die Kondensatchargen innerhalb des Beckens vermischt werden können.

Vorteilhaft ist es, wenn der Stickstoffgehalt des Kondensats, das nicht mit Hilfe der Reinigungsvorrichtung behandelt wird, vorzugsweise mit Hilfe eines Luftstrippingverfahrens, reduziert wird, bevor das Kondensat dem Abwasserkanal zugeführt wird. Beim so genannten Luftstripping werden flüchtige Bestandteile aus dem Kondensat ganz oder teilweise beseitigt, indem sie mit Dampf und/oder warmer oder kalter Luft in Berührung gebracht werden, wobei der Dampf bzw. die Luft die flüchtigen Bestandteile binden und somit entfernen. Die Regenerierung des Dampfes bzw. der Luft erfolgt z. B. mit Hilfe von sauren Wäschern mit Schwefel-, Phosphor- oder Salpetersäure, wobei das in die Gasphase gestrippte Ammoniak in verwertbare Ammoniumsalze überführt wird. Der Stickstoffgehalt der verbleibenden Flüssigkeit wird hierdurch reduziert, so dass diese anschließend in einen Abwasserkanal abgeleitet werden kann.

Auch ist es von Vorteil, wenn der pH-Wert des mit Hilfe der Reinigungsvorrichtung zu behandelnden Kondensats vor dem Einleiten des Kondensats in die Reinigungsvorrichtung gemessen und auf einen definierten Betrag eingestellt wird. Durch die Einstellung des pH-Werts auf vorzugsweise einen Betrag, der größer als 6, vorzugsweise größer als 7, ist, kann im Rahmen der anschließenden Behandlung des Kondensats mit Hilfe der Reinigungsvorrichtung ein gereinigtes Kondensat gewonnen werden, das hinsichtlich seiner Geruchsehmission unbedenklich ist, da die Carbonsäuren in diesem Fall im Reinigungsrückstand verbleiben.

Ebenso ist es vorteilhaft, wenn das zu behandelnde Kondensat vor dem Einleiten in die Reinigungsvorrichtung in einem Behältnis zwischengespeichert wird, wobei der pH-Wert des sich im Behältnis befindlichen Kondensats gemessen und auf einen definierten Betrag eingestellt wird. Bei dem Behältnis handelt es sich beispielsweise um einen Auffangtank, in den das Kondensat vor der Behandlung durch die Reinigungsvorrichtung eingeleitet wird. Die Bestimmung des pH-Werts erfolgt vorzugsweise automatisch mit einem pH-Meter (pH-Sensor). Auch die Einstellung des pH-Werts kann automatisch mit Hilfe einer Dosiereinheit erfolgen, über die je nach Anfangs-pH-Wert und gewünschtem pH-Wert Säure oder Lauge zugegeben wird. Vorzugsweise wird das Kondensat im Behältnis mit Hilfe eines Rührers durchmischt.

Des Weiteren ist es vorteilhaft, wenn bei der Trocknung des Klärschlamms aus der Trocknungsanlage abgeführte Abluft einem oder mehreren Abluftwäschern zugeführt und dort gereinigt wird, wobei der Prozess auch als Abschlämmung bezeichnet wird. Die Abluft entsteht, da bei der Trocknung vorzugsweise warme Luft durch den Schlamm oder an dessen Oberfläche vorbeigeführt wird, um die Trocknung zu beschleunigen. Die Abluft ist in der Regel mit unerwünschten Stoffen belastet, die durch den bzw. die Abluftwäscher aus der Abluft entfernt werden. Zum Einsatz kommen hierbei vorzugsweise so genannte saure oder alkalische Wäscher, in denen die Abluft mit einer sauren oder alkalischen Flüssigkeit bzw. einem Flüssigkeitsnebel in Kontakt gebracht wird. Bei der Reinigung der Abluft entsteht also mit den unerwünschten Stoffen belastetes Abschlämmwasser (das von dem oder den Wäschern stammt). Dieses Abschlämmwasser wird vorzugsweise ebenfalls der Reinigungsvorrichtung zugeführt und dort gemeinsam mit dem Kondensat behandelt, beispielsweise in ein Destillat und einen Destillationsrückstand (wie oben beschrieben) getrennt, die dann getrennt voneinander entsorgt werden können.

Generell sei an dieser Stelle darauf hingewiesen, dass die Destillationsvorrichtung eine oder mehrere Destillationsstufen umfassen kann.

Vorteilhaft ist es zudem, wenn das Abschlämmwasser vor dem Einleiten in die Reinigungsvorrichtung zunächst mit dem zu behandelnden Kondensat vermischt und anschließend gemeinsam mit diesem der Reinigungsvorrichtung zugeführt wird. Dies kann in dem genannten Behältnis erfolgen. Auch in diesem Fall ist es von Vorteil, wenn der pH-Wert der Mischung aus dem zu behandelnden Kondensat und dem Abschlämmwasser (die dann als Abwasser zu bezeichnen ist) gemessen und auf einen definierten Betrag eingestellt wird, wobei in diesem Zusammenhang auf die obige Beschreibung verwiesen wird.

Die Erfindung betrifft ferner eine Anlage zum Behandeln von Klärschlamm sowie von aus dem Klärschlamm entfernter Flüssigkeit. Die Flüssigkeit wird in der Anlage mit Hilfe einer Trocknungsanlage zumindest teilweise durch Wärmezufuhr aus dem Klärschlamm ausgetrieben. Der hierdurch entstehende Brüden wird mit Hilfe eines Verflüssigers der Trocknungsanlage kondensiert und kann anschließend weiterbehandelt werden. Das Kondensat ist mit unerwünschten Stoffen aus dem Klärschlamm belastet (siehe die obigen Ausführungen zum chemischen Sauerstoffbedarf und zum Stickstoffgehalt) und kann daher in der Regel nicht ohne weitere Behandlung in die Kanalisation geleitet werden.

Die Anlage umfasst daher eine Kondensatleitung (die selbstverständlich mehrere parallele und/oder in Reihe geschaltete Leitungsabschnitte aufweisen kann), über welche das Kondensat entweder über einen ersten Strömungsweg zu einer oben bereits erwähnten Reinigungsvorrichtung der Anlage oder über einen zweiten Strömungsweg (ohne Behandlung durch die Reinigungsvorrichtung) in einen Abwasserkanal geleitet werden kann.

Die Anlage umfasst ferner einen oder mehrere Sensoren, mit deren Hilfe der Stickstoffgehalt und/oder der chemische Sauerstoffbedarf des Kondensats (wie oben beschrieben) überwachbar ist. Der oder die Sensoren sind entweder in die Kondensatleitung oder einen Auffangbehälter integriert, in dem das Kondensat aufgefangen und anschließend an den Abwasserkanal oder die Reinigungsvorrichtung weitergeleitet wird. Ebenso können der oder die Sensoren Teil der Trocknungsanlage sein.

Ferner umfasst die Anlage eine Schließ- und/oder Weichenanordnung, mit deren Hilfe festlegbar ist, ob das Kondensat erst zur Reinigungsvorrichtung oder ohne Passieren der Reinigungsvorrichtung in den Abwasserkanal geleitet wird. Beispielsweise könnte die Schließ- und/oder Weichenanordnung ein oder mehrere Mehrwegventile umfassen, über die die von der Trocknungsanlage kommende Kondensatleitung mit dem ersten und dem zweiten Strömungsweg (die wiederum jeweils durch eine oder mehrere Flüssigkeitsleitungen gebildet werden oder diese umfassen) strömungstechnisch in Verbindung stehen. Die Schließ- und/oder Weichenanordnung kann zusätzlich oder alternativ auch Mittel umfassen, mit deren Hilfe einer der beiden Strömungswege geschlossen werden kann, so dass das Kondensat ausschließlich über den jeweils anderen Strömungsweg fließen kann.

Schließlich umfasst die Anlage eine Steuerung, welche die Stellung der Schließ- und/oder Weichenanordnung in Abhängigkeit des Stickstoffgehalts und/oder des chemischen Sauerstoffbedarfs des Kondensats steuert. Hinsichtlich der möglichen Verfahrensmerkmale, insbesondere im Hinblick auf entsprechende Grenzwerte, wird auf die obige Beschreibung verwiesen.

Ebenso bringt es Vorteile mit sich, wenn die Anordnung ein Behältnis umfasst, das in den ersten Strömungsweg eingebunden ist. In dem Behältnis kann das Kondensat zwischengespeichert werden, bevor es der Reinigungsvorrichtung zugeführt wird. Das Behältnis kann mit einem Rührer ausgerüstet sein, um das in das Behältnis strömende Kondensat mit dem sich bereits im Behältnis befindlichen Kondensat mischen zu können.

Des Weiteren ist es vorteilhaft, wenn dem Behältnis oder auch dem ersten Strömungsweg ein pH-Sensor sowie eine Dosiereinheit für die Zugabe von Säure und/oder Lauge zugeordnet sind, so dass der pH-Wert der im Behältnis vorhandenen Flüssigkeit ermittelbar und einstellbar ist. Der pH-Sensor und die Dosiereinheit stehen vorzugsweise mit einer Steuerung der Anlage in Verbindung, mit deren Hilfe die Messwerte des pH-Sensors auswertbar und die Dosierung von Säure oder Lauge automatisch durchführbar sind.

Ebenso bringt es Vorteile mit sich, wenn die Anlage zumindest einen Abluftwäscher umfasst, mit dessen Hilfe Abluft aus der Trocknungsanlage reinigbar ist, indem unerwünschte Stoffe aus der Trocknungsluft ausgewaschen werden. Der oder die Abluftwäscher stehen vorzugsweise strömungstechnisch mit der Reinigungsvorrichtung in Verbindung, so dass bei der Reinigung der Abluft anfallendes Abschlämmwasser der Reinigungsvorrichtung zugeführt werden kann. Ebenso ist es denkbar, dass der oder die Abluftwäscher strömungstechnisch mit dem genannten Behältnis in Verbindung stehen, so dass bei der Reinigung der Abluft anfallendes Abschlämmwasser dem Behältnis zugeführt und dort mit dem Kondensat vermischt werden kann, bevor die Mischung, die dann als Abwasser zu bezeichnen ist, der Reinigungsvorrichtung zugeführt wird.

Besondere Vorteile bringt es mit sich, wenn die Anlage die oben bereits erwähnte Vorrichtung zur Luftstrippung des Kondensats aufweist, mit deren Hilfe der Stickstoffgehalt des Kondensats, das nicht zur Reinigungsvorrichtung geleitet wird, reduzierbar ist. Die Vorrichtung zur Luftstrippung ist vorzugsweise über entsprechende Leitungsabschnitte mit der Trocknungsanlage und einer Kanalisation strömungstechnisch verbunden, so dass das Kondensat nach Passieren der Vorrichtung zur Luftstrippung einem Abwasserkanal zugeführt werden kann.

Insbesondere sollte die Reinigungsvorrichtung als Destillationsvorrichtung ausgebildet sein, mit deren Hilfe das Kondensat in ein Destillat und einen Destillationsrückstand trennbar ist. Auf weitere diesbezügliche Merkmale wird auf die obige bzw. nachfolgende Beschreibung verwiesen.

Des Weiteren ist es denkbar, die Art und/oder den Umfang der in der Reinigungsvorrichtung durchgeführten Reinigung des Kondensats in Abhängigkeit von zuvor festgelegten Grenzwerten des chemischen Sauerstoffbedarfs und/oder des Stickstoffgehalts des Kondensats zu wählen.

Liegt beispielsweise der chemische Sauerstoffbedarf über 25 mg/l, vorzugsweise über 30 mg/l, und/oder der Stickstoffgehalt (Stickstoff in Form von NH₄ bzw. anorganischem Gesamt-Stickstoff) über 5 mg/l, insbesondere über 10 mg/l (anzutreffen z. B. auf Kraftwerksstandorten), so wäre folgende mehrstufige Verfahrensführung vorteilhaft:

| | |
|---|---|
| Stufe 1: | Filtration des Kondensats zur Entfernung bzw. Reduzierung des partikulären chemischen Sauerstoffbedarfs (z.B. von 9000 mg/l auf unter 4000 mg/l), |
| Stufe 2: | Vakuumverdampfung zur Reduzierung des chemischen Sauerstoffbedarfs und des NH₄-Stickstoffs, |
| Stufe 3: | Adsorption an Aktivkohle zur weiteren Reduzierung des chemischen Sauerstoffbedarfs (z.B. von unter 500 mg/l auf unter 30 mg/l), |
| Stufe 4: | Dampfstrippung zur Ammoniumentfernung und Produktion von z.B. 25%-igem Ammoniakwasser, vorzugsweise für die NOₓ-Reduzierung in der Verbrennung auf Kraftwerksstandorten oder Luftstrippung zur Produktion von aufkonzentriertem, flüssigem Ammoniumsulfatdünger. |

Die Spülwässer von Stufe 1 und Stufe 3 werden vorzugsweise zurückgeführt und für weitere gleiche oder unterschiedlich ausgebildete Verfahrensschritte erneut verwendet.

Eine alternative Verfahrensführung ist denkbar für Grenzwerte des chemischen Sauerstoffbedarfs von rund 800 bis 1000 mg/l und NH₄-Stickstoff von unter 300 bis 500 mg/l (vorzugsweise in Absprache mit lokalen Kläranlagen).

Beispielsweise könnte ein entsprechendes Verfahren folgende Schritte umfassen:

| | |
|---|---|
| Stufe 1: | Filtration zur Entfernung des partikulären chemischen Sauerstoffbedarfs (z. B. von ca. 9000 mg/l auf unter 4000 mg/l), |
| Stufe 2: | mehrstufige Adsorption an Aktivkohle zur weiteren Reduzierung des chemischen Sauerstoffbedarfs im Bereich auf unter 1000 mg/l, |
| Stufe 3: | Luftstrippung zur Produktion von aufkonzentriertem, flüssigem Ammoniumsulfatdünger. |

Auch hier können Spülwässer von Stufe 1 und 2 zurückgeführt und erneut verwendet werden.

Eine weitere Variante der Verfahrensführung der Reinigung des Kondensats auf Kläranlagen könnte wie folgt gestaltet sein, wobei von einem verringerten chemischen Sauerstoffbedarf des Kondensats bei der Trocknung von kläranlageneigenen Schlämmen bei sehr niedrigem Anteil an partikulärem chemischen Sauerstoffbedarf, jedoch hohem Anteil an kristallinem Schwefel durch hohe Co-Substratgabe in der Faulung ausgegangen wird:

| | |
|---|---|
| Stufe 1: | Filtration zur Entfernung von kristallinem Schwefel, vorzugsweise mit Hilfe eines Scheibenfilters, |
| Stufe 2: | mehrstufige Adsorption an Aktivkohle zur weiteren Reduzierung des chemischen Sauerstoffbedarfs im Bereich auf beispielsweise unter 100 mg/l (falls notwendig), |
| Stufe 3: | Luftstrippung zur Produktion von aufkonzentriertem, flüssigen Ammoniumsulfatdünger (falls notwendig bzw. gewünscht). |

Die Filtration in Stufe 1 und/oder 2 kann beispielhaft durch eine Feinsiebtrommel (Siebweite beispielsweise > 200 µm) und eine nachgeschaltete Scheibenfiltration (vorzugsweise zweistufig, Siebweiten z. B. 100 µm bzw. 10 µm) durchgeführt werden. Das Spülwasser des bzw. der Filter, z. B. des Scheibenfilters, kann ebenfalls rückgeführt und erneut verwendet werden.

Auf Anlagenstandorten mit hoher Co-Fermentation (schwefelhaltige Proteine) zur Faulgaserzeugung in Stufe 3 fällt im Kondensat auch ein vergleichsweise hoher Anteil an kristallinen Schwefelablagerungen an. Hier könnte die Sedimentation durch einen Rundsandfänger, vorzugsweise mit Schneckenaustragung, und die Filtration über einen nachgeschalten, insbesondere mehrstufigen, Scheibenfilter durchgeführt werden. Dies hat den Vorteil, dass der in die Kläranlage über externe Co-Substrate eingebrachte Schwefel größtenteils ausgeschleust wird und keine / weniger Probleme in kristalliner Form durch Sedimentation in den Faulbehältern verursachen kann.

Weitere Vorteile der Erfindung sind in dem nachfolgenden Ausführungsbeispiel beschrieben.

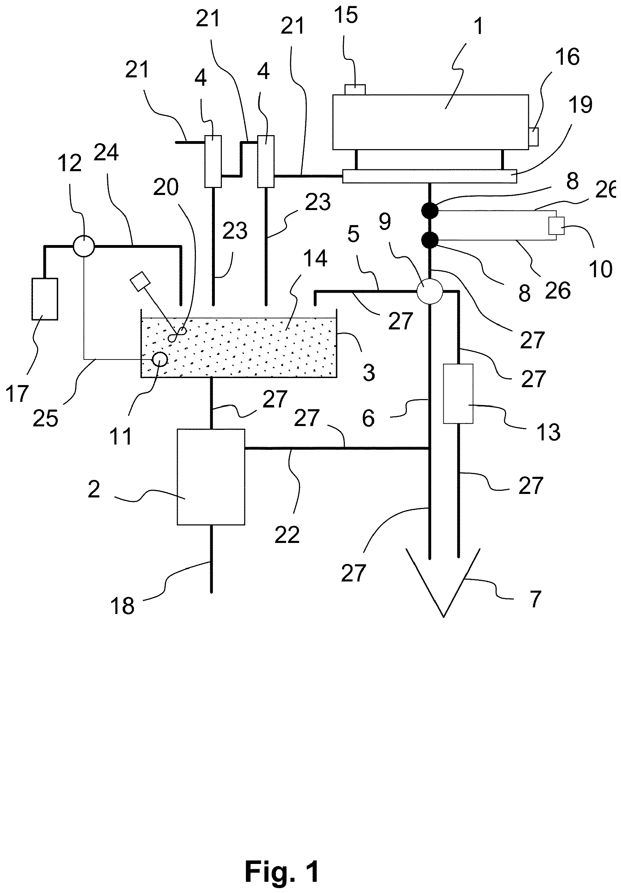

- **Figur 1**: eine mögliche Ausführung einer erfindungsgemäßen Anlage zur Durchführung des erfindungsgemäßen Verfahrens.

Die erfindungsgemäße Anlage umfasst eine Trocknungsanlage 1 zur Trocknung von Klärschlamm, beispielsweise in Form eines Bandtrockners. Der Klärschlamm wird über einen Einlass 15 in die Trocknungsanlage 1 chargenweise oder kontinuierlich eingebracht und dort erwärmt. Hierdurch verdampft im Klärschlamm vorhandene Flüssigkeit (Wasser mit darin gelösten bzw. mitgeführten Inhaltsstoffen), so dass die Trockenmasse des Klärschlamms erhöht bzw. dessen Feuchtegehalt reduziert wird. Der ganz oder teilweise getrocknete Klärschlamm verlässt die Trocknungsanlage 1 schließlich über einen Auslass 16.

Im Gegensatz hierzu wird die verdampfte Flüssigkeit mit Hilfe eines Verflüssigers 19 kondensiert und über eine Kondensatleitung 27 aus der Trocknungsanlage 1 abgeführt. Die Kondensatleitung 27 umfasst wenigstens einen ersten Strömungsweg 5 und einen zweiten Strömungsweg 6, wobei beide Strömungswege 5, 6 über eine Schließ- und/oder Weichenanordnung 9, vorzugsweise über ein Mehrwegeventil, über einen gemeinsamen Abschnitt der Kondensatleitung 27 mit der Trocknungsanlage 1 verbunden sind.

In den gemeinsamen Abschnitt sind vorzugsweise ein oder mehrere Sensoren 8 integriert, mit deren Hilfe sich der chemische Sauerstoffbedarf und/oder der Stickstoffgehalt des von der Trocknungsanlage 1 kommenden Kondensats ermitteln bzw. überwachen lassen. Der oder die Sensoren 8 können auch Teil der Trocknungsanlage 1 sein und stehen vorzugsweise über entsprechende Sensorleitungen 26 mit einer Steuerung 10 der Anlage in Verbindung.

In jedem Fall ist vorgesehen, dass das Kondensat in Abhängigkeit des ermittelten chemischen Sauerstoffbedarfs und/oder des Stickstoffgehalts entweder in den ersten Strömungsweg 5 oder den zweiten Strömungsweg 6 geleitet wird, wobei der Fluss des Kondensats mit Hilfe der Schließ- und/oder Weichenanordnung 9 geregelt wird. Die Steuerung 10 ist wiederum mit der Schließ- und/oder Weichenanordnung 9 und mit dem oder den genannten Sensoren 8 in Verbindung und wertet die Messwerte des oder der Sensoren 8 aus.

Liegen der chemische Sauerstoffbedarf und/oder der Stickstoffgehalt des Kondensats unterhalb entsprechend in der Steuerung 10 hinterlegten Grenzwerten, wird das Kondensat ohne Passieren der nachfolgend noch näher beschriebenen Reinigungsvorrichtung 2 über den zweiten Strömungsweg 6 in einen Abwasserkanal 7 geleitet.

In den zweiten Strömungsweg 6 kann eine Vorrichtung zur Luftstrippung 13 integriert sein, mit deren Hilfe der Stickstoffgehalt reduziert werden kann, wenn dieser über einem definierten Grenzwert liegt.

Liegen der chemische Sauerstoffbedarf und/oder der Stickstoffgehalt des Kondensats hingegen oberhalb von in der Steuerung 10 hinterlegten Grenzwerten, so wird das Kondensat über den ersten Strömungsweg 5 einer Reinigungsvorrichtung 2 zugeführt, die im gezeigten Beispiel als Destillationsvorrichtung ausgebildet ist.

Dies kann auf direktem Wege erfolgen. Bevorzugt wird das Kondensat jedoch vor der Zufuhr zur Destillationsvorrichtung in ein Behältnis 3 geleitet. Dort wird der pH-Wert mit Hilfe einer Dosiereinheit 12 für Säure und/oder Lauge auf einen definierten Wert eingestellt, wobei die Messung des pH-Werts mit Hilfe eines pH-Sensors11 vor oder innerhalb des Behältnisses 3 erfolgen kann. Der pH-Sensor 11 ist über eine Sensorleitung 26 mit der Dosiereinheit 12 und/oder der Steuerung 10 verbunden.

Gezeigt ist in Figur 1 ein Säurebehälter 17, der über eine Säureleitung 24 mit der Dosiereinheit 12 verbunden ist, wobei alternativ oder zusätzlich auch ein Laugenbehälter vorhanden sein kann.

Vorzugsweise umfasst das Behältnis 3 einen Rührer 20, um das Kondensat während der Einstellung des pH-Werts mit der zugegebenen Säure oder Lauge vermischen zu können.

Das Kondensat wird im weiteren Verfahren vom Behältnis 3 zur Destillationsvorrichtung geleitet. Dort wird es durch einen oder mehrere Destillationsschritte in ein Destillat (kondensierte verdampfte Phase) und einen Destillationsrückstand getrennt.

Während das Destillat aufgrund seines während der Destillation verringerten chemischen Sauerstoffbedarfs und/oder seines verringerten Stickstoffgehalts über eine Destillatleitung 22 in den Abwasserkanal 7 geleitet werden kann, wird der Destillationsrückstand, der hohe Konzentrationen an unerwünschten Stoffen enthält, einer speziellen Entsorgung zugeführt. Vorzugsweise wird der Destillationsrückstand über einen Ablass 18 aus der Destillationsvorrichtung entfernt und anschließend verbrannt.

Figur 1 zeigt des Weiteren, dass auch die Abluft aus der Trocknungsanlage 1 einer Reinigung unterzogen werden kann, bei der unerwünschte Stoffe aus der Abluft entfernt werden.

Die Abluft kann hierfür über eine Abluftleitung 21 durch einen oder mehrere Abluftwäscher 4 geleitet werden. Denkbar ist beispielsweise der Einsatz von sauren und/oder alkalischen Abluftwäschern 4, in denen die Abluft mit saurer oder alkalischer Reinigungsflüssigkeit in Kontakt gebracht wird, wobei hierdurch bestimmte Verbindungen aus der Abluft entfernt werden.

Die entsprechend belastete Reinigungsflüssigkeit (= so genanntes Abschlämmwasser) wird schließlich über eine oder mehrere Leitungen 23 aus dem oder den Abluftwäschern 4 entfernt und der Destillationsvorrichtung entweder direkt oder über das Behältnis 3, in dem es mit dem Kondensat vermischt wird zugeführt. Dies ist im gezeigten Beispiel der Fall, in dem das Kondensat im Behältnis 3 mit dem Abschlämmwasser vermischt wird und ein entsprechendes Abwasser 14 bildet.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder im Ausführungsbeispiel dargestellt und beschrieben sind, vorausgesetzt, dass kein Widerspruch zur Lehre der unabhängigen Ansprüche entsteht.

### Bezugszeichenliste

- 1: Trocknungsanlage
- 2: Reinigungsvorrichtung
- 3: Behältnis
- 4: Abluftwäscher
- 5: erster Strömungsweg
- 6: zweiter Strömungsweg
- 7: Abwasserkanal
- 8: Sensor
- 9: Schließ- und/oder Weichenanordnung
- 10: Steuerung
- 11: pH-Sensor
- 12: Dosiereinheit
- 13: Vorrichtung zur Luftstrippung
- 14: Abwasser
- 15: Einlass
- 16: Auslass
- 17: Säurebehälter
- 18: Ablass
- 19: Verflüssiger
- 20: Rührer
- 21: Abluftleitung
- 22: Destillatleitung
- 23: Leitung für Abschlämmwasser
- 24: Säureleitung
- 25: Fühlerleitung
- 26: Sensorleitung
- 27: Kondensatleitung

## Patentansprüche

1. Verfahren zur Behandlung von Kondensat, welches bei der Trocknung von Klärschlamm im Bereich einer Trocknungsanlage (1) anfällt, **dadurch gekennzeichnet, dass** das Kondensat zumindest im Hinblick auf seinen Stickstoffgehalt und/oder seinen chemischen Sauerstoffbedarf überwacht wird, und dass das Kondensat in Abhängigkeit seines Stickstoffgehalts und/oder seines chemischen Sauerstoffbedarfs entweder direkt über einen Abwasserkanal (7) entsorgt oder einer Reinigungsvorrichtung (2) zugeführt wird.

2. Verfahren gemäß dem vorangegangenen Anspruch, **dadurch gekennzeichnet, dass** die Reinigungsvorrichtung (2) als Destillationsvorrichtung ausgebildet ist, wobei das Kondensat mit Hilfe der Destillationsvorrichtung destilliert und dabei in ein Destillat und einen Destillationsrückstand getrennt wird, und wobei das Destillat und der Destillationsrückstand separat entsorgt werden.

3. Verfahren gemäß einem der vorangegangen Ansprüche, dadurchgekennzeichnet, dass das Kondensat der Reinigungsvorrichtung (2) zugeführt wird, wenn der chemische Sauerstoffbedarf des Kondensats über 500 mg/l, vorzugsweise über 700 mg/l, und/oder der Stickstoffgehalt des Kondensats über 70 mg/l, vorzugsweise über 90 mg/l, liegt.

4. Verfahren gemäß einem der vorangegangenen Ansprüche, **dadurch gekennzeichnet, dass** das Kondensat, das nicht der Reinigungsvorrichtung (2) zugeführt wird, das mit Hilfe der Reinigungsvorrichtung behandelte Kondensat und/oder das Destillat, das bei der Destillation des Kondensats entsteht, dem Abwasserkanal (7) zugeführt werden.

5. Verfahren gemäß einem der vorangegangenen Ansprüche, **dadurch gekennzeichnet, dass** der Stickstoffgehalt des Kondensats, das nicht der Reinigungsvorrichtung (2) zugeführt wird, vorzugsweise mit Hilfe eines Luftstrippingverfahrens, reduziert wird, bevor das Kondensat dem Abwasserkanal (7) zugeführt wird.

6. Verfahren gemäß einem der vorangegangenen Ansprüche, **dadurch gekennzeichnet, dass** der pH-Wert des Kondensats vor dem Einleiten des Kondensats in die Reinigungsvorrichtung (2) gemessen und auf einen definierten Betrag eingestellt wird.

7. Verfahren gemäß einem der vorangegangenen Ansprüche, **dadurch gekennzeichnet, dass** das Kondensat vor dem Einleiten in die Reinigungsvorrichtung (2) in einem Behältnis (3) zwischengespeichert wird, wobei der pH-Wert der sich im Behältnis (3) befindlichen Flüssigkeit gemäß dem vorangegangenen Anspruch gemessen und auf einen definierten Betrag eingestellt wird.

8. Verfahren gemäß einem der vorangegangenen Ansprüche, **dadurch gekennzeichnet, dass** bei der Trocknung des Klärschlamms aus der Trocknungsanlage (1) abgeführte Abluft einem oder mehreren Abluftwäschern (4) zugeführt und dort gereinigt wird, wobei bei der Reinigung anfallendes Abschlämmwasser ebenfalls der Reinigungsvorrichtung (2) zugeführt wird.

9. Verfahren gemäß dem vorangegangenen Anspruch, **dadurch gekennzeichnet, dass** das Abschlämmwasser vor dem Einleiten in die Reinigungsvorrichtung (2) zunächst mit dem Kondensat vermischt und anschließend gemeinsam mit diesem der Reinigungsvorrichtung (2) zugeführt wird, wobei vorzugsweise der pH-Wert der Mischung aus dem Kondensat und dem Abschlämmwasser gemessen und auf einen definierten Betrag eingestellt wird.

10. Anlage zum Behandeln von Klärschlamm sowie von aus dem Klärschlamm entfernter Flüssigkeit, wobei die Anlage eine Trocknungsanlage (1) zum Entfernen von Flüssigkeit aus dem Klärschlamm durch Verdampfen der Flüssigkeit umfasst, und wobei die Trocknungsanlage (1) einen Verflüssiger (19) umfasst, mit dessen Hilfe die verdampfte Flüssigkeit wieder verflüssigbar ist, so dass ein aus der Trocknungsanlage (1) abzuführendes Kondensat entsteht, **dadurch gekennzeichnet, dass** die Anlage eine Kondensatleitung (27) umfasst, über welche das Kondensat entweder über einen ersten Strömungsweg (5) zu einer Reinigungsvorrichtung (2) der Anlage oder über einen zweiten Strömungsweg (6) in einen Abwasserkanal (7) geleitet werden kann, dass die Anlage einen oder mehrere Sensoren (8) umfasst, mit deren Hilfe der Stickstoffgehalt und/oder der chemische Sauerstoffbedarf des Kondensats überwachbar ist, wobei die Anlage eine Schließ- und/oder Weichenanordnung (9) umfasst, mit deren Hilfe festlegbar ist, ob das Kondensat zur Reinigungsvorrichtung (2) oder ohne Passieren der Reinigungsvorrichtung (2) in den Abwasserkanal (7) geleitet wird, und wobei die Anlage eine Steuerung (10) umfasst, welche die Stellung der Schließ- und/oder Weichenanordnung (9) in Abhängigkeit des Stickstoffgehalts und/oder des chemischen Sauerstoffbedarfs des Kondensats steuert.

11. Anlage gemäß dem vorangegangenen Anspruch, **dadurch gekennzeichnet, dass** die Reinigungsvorrichtung (2) als Destillationsvorrichtung ausgebildet ist, mit deren Hilfe das Kondensat in ein Destillat und einen Destillationsrückstand trennbar ist.

12. Anlage gemäß Anspruch 10 oder 11, **dadurch gekennzeichnet, dass** die Anordnung ein Behältnis (3) umfasst, das in den ersten Strömungsweg (5) eingebunden ist und das dem Zwischenspeichern des Kondensats dient, bevor dieses der Reinigungsvorrichtung (2) zugeführt wird.

13. Anlage gemäß einem der Ansprüche 10 bis 12, **dadurch gekennzeichnet, dass** dem Behältnis (3) ein pH-Sensor (11) sowie eine Dosiereinheit (12) für die Zugabe von Säure und/oder Lauge zugeordnet sind, so dass der pH-Wert der im Behältnis (3) vorhandenen Flüssigkeit ermittelbar und einstellbar ist.

14. Anlage gemäß einem der Ansprüche 10 bis 13, **dadurch gekennzeichnet, dass** die Anlage zumindest einen Abluftwäscher (4) umfasst, mit dessen Hilfe Abluft aus der Trocknungsanlage (1) reinigbar ist, wobei der oder die Abluftwäscher (4) strömungstechnisch mit der Reinigungsvorrichtung (2) in Verbindung stehen, so dass bei der Reinigung der Abluft anfallendes Abschlämmwasser der Reinigungsvorrichtung (2) zuführbar ist, oder wobei der oder die Abluftwäscher (4) strömungstechnisch mit dem Behältnis (3) in Verbindung stehen, so dass bei der Reinigung der Abluft anfallendes Abschlämmwasser dem Behältnis (3) zugeführt und dort mit dem Kondensat vermischt werden kann.

15. Anlage gemäß einem der Ansprüche 10 bis 14, **dadurch gekennzeichnet, dass** die Anlage eine Vorrichtung zur Luftstrippung (13) des Kondensats aufweist, mit deren Hilfe der Stickstoffgehalt des Kondensats, das nicht zur Reinigungsvorrichtung (2) geleitet wird, reduzierbar ist.
